# EUROPEAN PATENT SPECIFICATION

(11) **EP 2 631 731 B1**
(45) Date of publication and mention of the grant of the patent: **27.01.2021**
(21) Application number: 13156309.0
(22) Date of filing: 22.02.2013
(51) Int. Cl.: G05D 1/02, A01D 34/00

(54) **Improved robotic work tool**
Verbessertes Roboter-Arbeitswerkzeug
Outil de travail robotique amélioré

(30) Priority: 27.02.2012 DE 202012100666 U
(43) Date of publication of application: 28.08.2013
(73) Proprietor: Husqvarna AB, 561 82 Huskvarna (SE)
(72) Inventor: Elonsson, Martin, 561 92 Huskvarna (SE); Jägenstedt, Patrik, 560 27 Tenhult (SE); Öhrlund, Magnus, 570 21 Malmbäck (SE); Markusson, Olle, 564 32 Bankeryd (SE); Björn, Jonathan, 553 24 Jönköping (SE)

(56) References cited:
- US-A1- 2005 213 082
- US-A1- 2008 109 114
- US-A1- 2011 142 099
- US-A1- 2011 166 701
- US-A1- 2011 234 153
- US-B1- 6 438 456

## Description

### TECHNICAL FIELD

This application relates to a method and a robotic work tool system for enabling user control of a robotic work tool.

### BACKGROUND

Robotic garden tools such as robotic lawn mowers are arranged to autonomously travel within a working area and to perform a task, such as mowing the lawn, within the working area. A docking device may be arranged within or in the proximity of a border of the working area.

A robotic garden tool, travelling within the working area may be arranged to return to the docking device as a result of various reasons. As an example, a battery powered robotic garden tool may be configured to autonomously return to a docking device comprising a battery charging unit as soon as the charging level of the battery falls below a threshold value.

Robotic garden tools may also be equipped with a user actuated input device, which upon activation prompts the robotic garden tool to return to the docking device. In that way, an operator may search out the robotic garden tool travelling within the working area and then manually trigger the robotic garden tool to return to the docking device by means of activating the user actuated input device.

US 2011/234153A1 discloses a charging and control system for a robotic lawnmower. The lawnmower has a transmitter/receiver for sensing instructions via wireless communication. The positioning signals received and analysed by circuitry connected to a power source on a lawnmower and provides a communication between the lawnmower and a boundary wire.

US 6,438,456B1 discloses a portable control device and a method for a controlling autonomous robots, which control device comprises_a handheld computer and a radio board.

US 2008/109114A1 discloses a robot control apparatus which controls tasks to be executed by robots which are capable of moving using a map information database and a database manager

Documents US2005/213082A1, US2011/166701A1 and US2011/142099A1 are also known.

A remote control may also be used to manually trigger the robotic garden tool to return to the docking device. Furthermore, remote controls have a tendency to be lost or misplaced and especially if more than one user handles the remote control.

However, there is a need for a simple and robust arrangement for allowing an operator to manually trigger the robotic garden tool to return to the docking device.

### SUMMARY

According to the invention, the problems above are solved by means of providing a robotic garden tool guiding system in which the docking device comprises a return command input device. In that way the operator does not need to search out the robotic garden tool before triggering it to return to the docking device. Furthermore, the return command input device is always easy to find, since it is permanently arranged on the docking device. The arrangement may be manufactured at a low cost.

It is an object of the teachings of this application to overcome the problems listed above by providing a robotic work tool system according to claim 1.

It is an object of the teachings of this application to overcome the problems listed above by providing a method according to claim 10.

In one embodiment the robotic work tool is a robotic lawnmower.

The inventors of the present invention have realized, after inventive and insightful reasoning, that by enabling for a simplified user interface arranged on or adjacent to the charging station a user is enabled to control the robotic work tool in a simple and intuitive manner and in a timely fashion.

### BRIEF DESCRIPTION OF DRAWINGS

The invention will be described in further detail under reference to the accompanying drawings in which:
Figure 1 shows a schematic overview of a robotic garden tool system according to one embodiment of the teachings of this application;
Figure 2 shows a schematic view of a robotic garden tool and a docking station according to one embodiment of the teachings of this application;
Figure 3 shows a schematic overview of a robotic work tool according to one embodiment of the teachings of this application;
Figures 4A and 4B each shows a schematic view of a robotic working tool system according to one embodiment of the teachings of this application; and
Figure 5 shows a flowchart for a method according to one embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

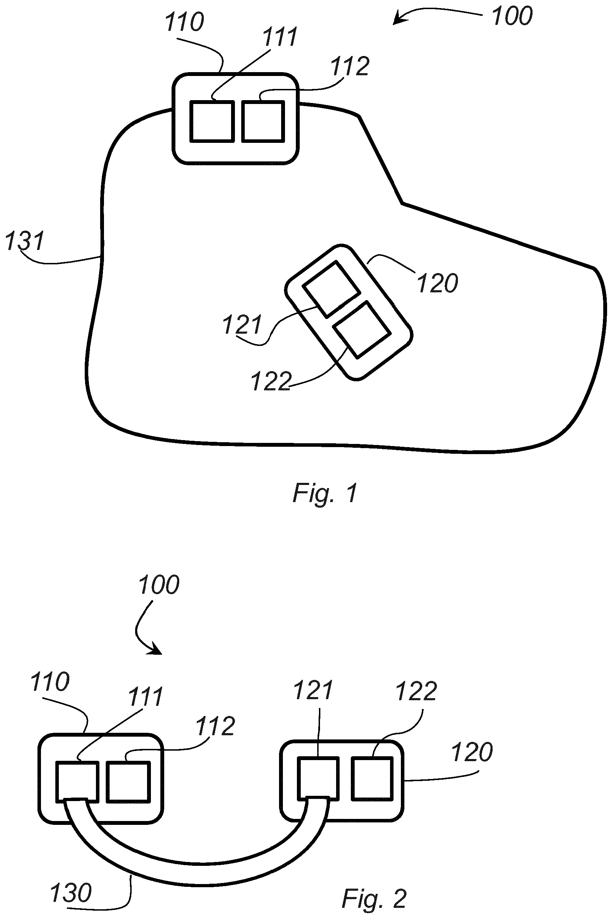

Figure 1 shows a robotic garden tool system. The robotic garden tool guiding system 100 comprises a docking device 110. The docking device has a signal transferring unit 111. The robotic garden tool guiding system also comprises a robotic garden tool 120 having an operating state in which it travels within a working area, and a charging state in which it is connected to the docking device 110. The robotic garden tool has a signal sensing unit 121 and a control unit 122. The control unit 122 is arranged to initiate movement of the robotic garden tool from the operating state to the charging state, as a response to a predetermined recall command received by the signal sensing unit 121. The robotic garden tool guiding system also comprises a communication interface 130 interconnecting the signal transferring unit 111 of the docking device 110 and the signal sensing unit 121 of the robotic garden tool 120.

The docking device 110 comprises a user actuated input member 112, which user actuated input member 112 is operable to trigger transfer of the predetermined recall command from the signal transferring unit 111 to the signal sensing unit 121, via the communication interface 130 as can be seen in figure 2.

The communication interface may comprise a boundary wire 131. Alternatively, the communication interface may comprise a radio link.

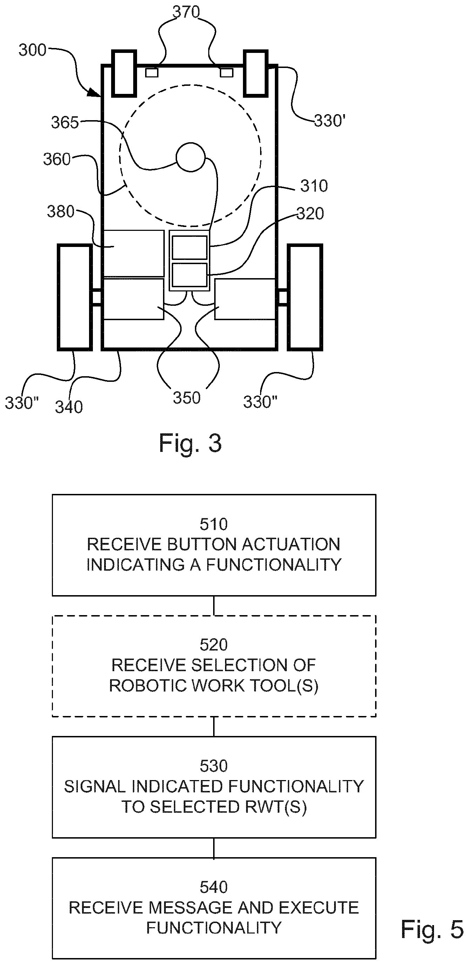

Figure 3 shows a schematic overview of a robotic work tool 300 having a body 340 and a plurality of wheels 330. In the exemplary embodiment of figure 3 the robot 300 has 4 wheels 330, two front wheels 330' and the rear wheels 330". At least some of the wheels 330 are driveably connected to at least one electric motor 350. It should be noted that even if the description herein is focussed on electric motors, combustion engines may alternatively be used possibly in combination with an electric motor.

In the example of figure 3, the rear wheels 330" are connected to each an electric motor 350. This allows for driving the rear wheels 330" independently of one another which, for example, enables steep turning.

The robotic work tool 300 also comprises a controller 310. The controller 310 may be implemented using instructions that enable hardware functionality, for example, by using executable computer program instructions in a general-purpose or special-purpose processor that may be stored on a computer readable storage medium (disk, memory etc) 320 to be executed by such a processor. The controller 310 is configured to read instructions from the memory 320 and execute these instructions to control the operation of the robotic work tool 300. The controller 310 may be implemented using any suitable, publically available processor or Programmable Logic Circuit (PLC). The memory 320 may be implemented using any commonly known technology for computer-readable memories such as ROM, RAM, SRAM, DRAM, CMOS, FLASH, DDR, SDRAM or some other memory technology.

The robot 300 further has at least one sensor 370, in the example of figure 3 there are two sensors 370, arranged to detect a magnetic field (not shown). The sensors are connected to the controller 310 and the controller 310 is configured to process any signals received from the sensors 370. The sensor signals may be caused by the magnetic field caused by a control signal being transmitted through a boundary wire (for more details on charging stations, control signals and boundary wires, see the description below with reference to figure 2). This enables the controller 310 to determine whether the robot 300 is inside or outside an area enclosed by a boundary wire.

The controller 310 is connected to the motors 350 for controlling the propulsion of the robot 300 which enables the robot 300 to service an enclosed area without leaving the area.

The robot 300 also comprises a work tool 360, which may be a grass cutting device, such as a rotating blade 360 driven by a cutter motor 365. The cutter motor 365 is connected to the controller 310 which enables the controller 310 to control the operation of the cutter motor 365. The controller is also configured to determine the load exerted on the rotating blade, by for example measure the power delivered to the cutter motor 365 or by measuring the axle torque exerted by the rotating blade. The robot 300 is, in one embodiment, a lawnmower robot.

The robot 300 also has (at least) one battery 380 for providing power to the motors 350 and the cutter motor 365.

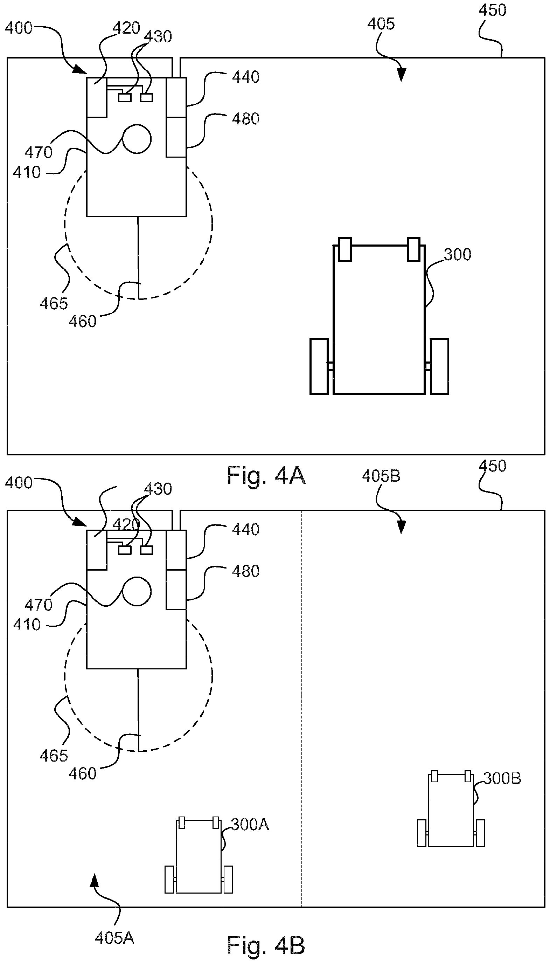

Figure 4A shows a schematic view of a robotic working tool system 400 comprising a charging station 410 and a boundary wire 450 arranged to enclose a working area 405, the working area 405 not necessarily being a part of the robot system 400, in which the robotic work tool 300 is supposed to service. The charging station 410 has a charger 420 coupled to, in this embodiment, two charging plates 430. The charging plates 430 are arranged to co-operate with corresponding charging plates (not shown) of the robotic work tool 300 for charging the battery 380 of the robotic work tool 300. The charging station 410 also has, or may be coupled to, a signal generator 440 for providing a control signal (not shown) to be transmitted through the boundary wire 450. The control signal preferably comprises a number of periodic current pulses. As is known in the art, the current pulses will generate a magnetic field around the boundary wire 450 which the sensors 370 of the robotic work tool 300 will detect. As the robotic work tool 300 (or more accurately, the sensor 370) crosses the boundary wire 450 the direction of the magnetic field will change. The robotic work tool 300 will thus be able to determine that the boundary wire has been crossed. The use of more than one sensor 370 enables the controller 310 of the robotic work tool 300 to determine how the robotic work tool 300 is aligned with relation to the boundary wire 450 by comparing the sensor signals received from each sensor 170. This enables the robot to follow the boundary wire 450, for example when returning to the charging station 410 for charging.

Optionally, the charging station 410 also has a guide cable 460 for enabling the robot to find the entrance of the charging station 410. In one embodiment the guide cable 460 is formed by a loop of the boundary wire 450.

In one embodiment the guide wire 460 is used to generate a magnetic field 465 for enabling the robotic work tool 300 to find the charging station without following a guide cable 460. The field is sometimes referred to as an F-range indicating the range within which the field can be sensed. The F-range 465 may be generated by the guide cable 460 or other cable, possibly being arranged in a loop, or other means for generating a magnetic field.

The robotic work tool 300 may then find the charging station 410 by following the F-range 465 towards increasing field strength. By sending different current pulses through the guide cable 460 and the boundary wire 450, and possibly by generating the magnetic field in the F-range using a different current profile, the robotic work tool 300 will be able to determine which magnetic field results from which cable/field. The different control signals may for example comprise coded signals that differentiate the cables 450, 460.

The charging station 410 is also arranged with a communication interface 480. In one embodiment the communication interface is operably connected to (or part of) the signal generator 440 for transmitting a coded signal through the boundary wire, and/or the guide cable 460.

In one embodiment the communication interface is a wireless communication interface such as a radio frequency interface, for example configured to operate according to the LTE standard (Long Term Evolution).

The charging station 410 is further arranged with a user control console 470. In one embodiment the user control console comprises a button 470. In one embodiment the user control console is arranged to be positioned remotely from the charging station 410. This allows for mounting the user control console 470 in a convenient place.

The use of a few or a single button enables for easy access to a user, and for indicating the function of the button. For example the function of a stop button is easily indicated by a red button signalling intuitively to any user or by passer the function without the need for consulting a manual or other instructions.

The charging station 410 is configured to send out a signal to the robotic work tool 300, in response to an actuation of the button 470, wherein the signal comprises a command for effectuating the functionality associated with the button 470.

In one embodiment the user control console comprises a button 470 (for example red) associated with a stop functionality, whereby the robotic work tool 300 is caused to stop its current operation upon activation of the stop button 470. In one such embodiment the robotic work tool 300 is configured to move to a boundary wire (possibly discontinue its mowing operation while moving) before stopping completely to avoid that the user has to go out and move the robotic work tool by hand for example if it is in the way.

In one embodiment the user control console comprises a button 470 (for example black) associated with a recall functionality, whereby the robotic work tool 300 is caused to stop its current operation and return to the charging station upon activation of the recall button 470. In one embodiment the robotic work tool 300 is configured to continue the mowing operation when searching for and returning to the charging station 410 for enabling a more time efficient operation. In one embodiment the robotic work tool 300 is configured to discontinue the mowing operation when searching for and returning to the charging station 410 for enabling a safer operation in case the robotic work tool 300 is being recalled for security reasons such as when allowing pets or children to play in the work area 405.

In one embodiment the user control console comprises a button 470 (for example orange) associated with a pause functionality, whereby the robotic work tool 300 is caused to pause its current operation upon activation of the pause button 470. In one such embodiment the robotic work tool 300 is configured to move to a boundary wire (possibly discontinue its mowing operation while moving) before pausing. In one embodiment the pause functionality is associated with a time period and the robotic work tool 300 and/or the charging station 410 is arranged to monitor the time period and upon expiration of the time period restart the robotic work tools 300 operation.

In one embodiment the user control console comprises a button 470 (for example green) associated with a start functionality, whereby the robotic work tool 300 is caused to start or restart its (previous) operation upon activation of the start button 470.

In one embodiment the charging station 410 is arranged and configured to service more than one robotic work tool 300, such as a fist robotic work tool 300A and a second robotic work tool 300B.

Figure 4B shows an example of such a system where a first robotic work tool 300A and a second robotic work tool 300B is arranged to work in a work area 405. In one example, as shown in figure 4B, the work area 405 is divided into a first subsection 405A and a second subsection 405B, the first subsection 405A being closer to the charging station 410.

In one such embodiment the user control console 470 may comprise a set of function buttons for each robotic work tool 300. In another such embodiment the user control console may comprise one set of buttons and a robotic work tool selection button. In such an embodiment the user may select a robotic work tool 300 for which the function should be effected by pressing the robotic work tool selection button prior to (or after) pressing a functionality button. In one embodiment the charging station 410 is configured to receive a number of selections of robotic work tools 300, by receiving actuations of respective robotic work tool selection buttons, and the charging station 410 signals the functionality to all selected robotic work tools 300. In one embodiment the robotic work tool(s) 300 is/are selected through selections from a robotic work tool list being displayed on a display (not shown) comprised in the user control console 470, for example an LCD (Liquid Cristal Display).

By configuring the charging station 410 to receive the robotic work tool selection before the functionality to be effected, a user is sure that the functionality is signaled to all or the selected robotic work tools 300 upon pressing the corresponding functionality button. This ensures a fast reaction from the system in a situation requiring haste (such as in an emergency) where the charging station 410 does not hold off on waiting for further instructions as a functionality button 470 is pressed or actuated.

If no robotic work tool selection button 470 is pressed, or not robotic work tool is selected in an n other fashion, the functionality is signaled to all robotic work tools 300 serviced by the charging station 410. This allows for a reduced set of buttons which enables control of a selected robotic work tool 300 and for simple and fast control of a group of robotic work tools 300.

In an embodiment where the charging station 410 services more than one robotic work tool 300, as in figure 4B, the charging station 410 is configured to identify an robotic work tool 300. The identification can be implemented as the robotic work tool 300 actively identifying itself by providing an identification signal, for example through the charging plates 430 or through a wireless interface. In one embodiment the robotic work tool 300 may communicate with the charging station by causing the driving wheels 330" to deliver a vibration or knocking pattern that is sensed by the charging station.

As stated above figure 4B shows such a robotic work tool system 400 where a first robotic work tool 300A and a second robotic work tool 300B are operating and being serviced by the same charging station 410.

The charging station 410 is thus arranged to know the identity of a first robotic work tool 300A currently occupying the charging station 410. To avoid that a second robotic work tool 300B tries to dock with the charging station as it tries to return to the charging station at the end of its work session or because it is running low on power, and also to prevent that such second robotic work tool 300B is blocking the first robotic work tool 300A currently being serviced from reversing out of the charging station 410, the charging station 410 is configured to signal to the second robotic work tool 300B that the charging station 410 is occupied and that the second robotic work tool 300B should pause any attempt to reach the charging station 410.

To avoid that the second robotic work tool 300B runs out of power while pausing, the robotic work tool 300B is configured to communicate its battery status to the charging station 410. If the charging station 410 receives an indication that the second robotic work tool 300B is running out of power it may instruct the robotic work tool 300A currently occupying the charging station 410 to exit the charging station 410. Dependent on the reason of the robotic work tool 300A occupying the charging station 410 (for example an active recall or to recharge) the charging station 410 can instruct the robotic work tool 300A to exit the charging station 410 and to park adjacent the charging station 410 or the boundary wire 250, to continue its work operation or to exit the charging station 410 and reconnect to the charging station 410 as the second robotic work tool 300B has been serviced.

The work area 405 of figure 4B is divided into a first subsection 405A and a second subsection 405B. The first and second robotic work tool 300A, 300B may be arranged to service each a subsection 405A,B.

In one embodiment, the charging station 410 may also be arranged to instruct the second robotic work tool 300B to service the work area subsection 405A of the first robotic work tool 300A as the first robotic work tool 300A is being serviced by the charging station 410 - or otherwise prevented from servicing its work area subsection 405A - in addition to servicing its own work area subsection 405B or instead of servicing its own work area subsection 405B.

The charging station 410 may also be arranged to instruct the first robotic work tool 300A to service the second work area subsection 405B as the first robotic work tool 300A has been serviced by the charging station 410.

This allows for arranging the first robotic work tool 300A and the second robotic work tool 300B to service a work area subsection 405A, 405B in accordance with is battery status. The most freshly charged robotic work tool 300 is instructed to service or operate in the most remote work area 405B. This allows for running the robotic work tools for a longer time as the robotic work tool 300 about to run out of power the soonest is always the robotic work tool 300 closest to the charging station 410.

In one embodiment the user control console comprises a button 470 (for example blue or carrying a double arrow or two counter facing arrows) associated with a switch functionality, whereby the robotic work tool 300 is caused to switch from one work area subsection 405A to another work area subsection 405B upon activation of the switch button 470. This enables for a user to control which robotic work tool 300 is operating in which subsection and also how many robotic work tools 300 are operating in each subsection 405A,B. This is useful if, for example a pet is playing in a first subsection 405A, whereby the second work area subsection 405B may be more efficiently serviced by two robotic work tools 300a and 300B instead of one robotic work tool 300A idly waiting.

It should be noted that the manner of arranging the work area into subsections and operating in the subsection(s) furthest away from the charging station when the battery is fully loaded may also be used for a robotic work tool system comprising only one robot as well. In such an embodiment the robotic work tool is configured to determine if the current battery level is above a threshold associated with a subsection and when the current level falls below the threshold level, the robotic work tool switches to a subsection having a lower threshold level. This enables the robotic work tool to use more of its battery capacity while still being able to return to the charging station as it progressively moves closer and closer to the charging station as its battery level goes down.

It should be noted that although the description herein refers to buttons, it should be noted that other switches are also plausible.

Figure 5 shows a flow chart for a general method of the teachings herein. The method will be described with simultaneous reference to figures 1, 2, 3 and 4.

The method is implemented by a robotic work tool 300, such as the robotic work tool 300 of figure 3 being part of a robotic work tool system, such as the robotic work tool system 400 of figure 4. The robotic work tool system receives 510 user input indicating a functionality through a user control console 470, and transmits 530 a message to the robotic work tool 300, wherein the message comprises a command for effecting the indicated functionality, and receiving said message and executing 540 the indicated functionality in the robotic work tool 300. Optionally, the robotic work tool system receives 520 a selection of which robotic work tool to transmit the message to.

References to 'computer-readable storage medium', 'computer program product', 'tangibly embodied computer program' etc. or a 'controller', 'computer', 'processor' etc. should be understood to encompass not only computers having different architectures such as single/multi- processor architectures and sequential/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

One benefit of the teachings herein is that the robotic work tool system is enabled to adapt to differing work areas so that the risk that the robotic work tool is unable to reach the charging station is greatly reduced.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A robotic work tool system (400), comprising a first and a second robotic work tool (300A, 300B), one charging station (410), a boundary wire (450), a signal generator (440) for generating and transmitting a signal through said boundary wire (450) for demarcating a work area (405),
said robotic work tool system (400) being configured to:
receive user input indicating a functionality through a user control console (470); and
transmit a first message to the first and/or the second robotic work tool (300A, 300B),
wherein the first message comprises a command for effecting the indicated functionality;
whereby the first and/or the second robotic work tool (300A, 300B) is configured to:
receive said first message and execute the indicated functionality
the robotic work tool system being **characterized in that**
said charging station (410) being arranged and configured to service said first and second robotic work tool (300A, 300B),
wherein the robotic work tool system (400) is further configured to:
identify the first robotic work tool (300A) when the first robotic work tool (300A) is in the charging station (410), and to
transmit a second message to the second robotic work tool (300B) to signal to the second robotic work tool (300B) that the charging station (410) is occupied and that the second robotic work tool (300B) should pause any attempt to reach the charging station (410).

2. The robotic work tool system (400) according to claim 1, wherein the user control console comprises at least one button (470).

3. The robotic work tool system (400) according to claim 1 or 2, wherein the functionality corresponds to at least one taken from a group comprising: start, stop, pause, recall and/or switch.

4. The robotic work tool system (400) according to any preceding claim further configured to transmit said first message through the signal being transmitted through the boundary wire (450).

5. The robotic work tool system (400) according to any preceding claim wherein the robotic work tool system (400) is further configured to determine which robotic work tool (300A, 300B) to transmit said first message to.

6. The robotic work tool system (400) according to claim 5 further configured to base the determination of which robotic work tool (300A, 300B) to transmit said first message to on a user selection.

7. The robotic work tool system (400) according to claim 6 further configured to transmit said first message to all robotic work tools (300A, 300B) if no user selection is received.

8. The robotic work tool system (400) according to any preceding claim, wherein the robotic work tool system (400) is configured to transmit a message to said second robotic work tool (300B) indicating a command to switch from a second work area subsection (405B) to a first work area subsection (405A) being closer to the charging station (410) as the first robotic work tool (300A) has been serviced by the charging station (410).

9. The robotic work tool system (400) according to any preceding claim, wherein the first and the second robotic work tools (300A, 300B) are robotic lawn mowers.

10. A method for use in a robotic work tool system (400), comprising a first and a second robotic work tool (300A, 300B), one charging station (410) a boundary wire (450), a signal generator (440) for generating and transmitting a signal through said boundary wire (450) for demarcating a work area (405), the method comprising:
receiving user input indicating a functionality through a user control console (470); and
transmitting a first message to the first and/or the second robotic work tool (300A, 300B),
wherein the first message comprises a command for effecting the indicated functionality; and
receiving said first message and executing the indicated functionality in the first and/or the second robotic work tool (300A, 300B), said method being **characterized in that**
said charging station (410) is arranged and configured to service said first and second robotic work tool (300A, 300B),
wherein the method further comprises
identifying the first robotic work tool (300A) when the first robotic work tool (300A) is in the charging station (410), and
transmitting a second message to the second robotic work tool (300B) to signal to the second robotic work tool (300B) that the charging station (410) is occupied and that the second robotic work tool (300B) should pause any attempt to reach the charging station (410).

## Patentansprüche

1. Roboterarbeitswerkzeugsystem (400), das Folgendes umfasst: ein erstes und ein zweites Roboterarbeitswerkzeug (300A, 300B), eine Ladestation (410), einen Begrenzungsdraht (450), einen Signalgenerator (440) zum Erzeugen und Übertragen eines Signals durch den Begrenzungsdraht (450) zum Abgrenzen eines Arbeitsbereichs (405);
wobei das Roboterarbeitswerkzeugsystem (400) für Folgendes konfiguriert ist:
Empfangen von Benutzereingaben, die eine Funktionalität anzeigen, über eine Benutzersteuerkonsole (470); und
Senden einer ersten Nachricht an das erste und/oder das zweite Roboterarbeitswerkzeug (300A, 300B),
wobei die erste Nachricht einen Befehl zum Bewirken der angegebenen Funktionalität umfasst;
wobei das erste und/oder das zweite Roboterarbeitswerkzeug (300A, 300B) für Folgendes konfiguriert ist:
Empfangen der ersten Nachricht und Ausführen der angegebenen Funktionalität,
wobei das Roboterarbeitswerkzeugsystem **dadurch gekennzeichnet ist, dass**
die Ladestation (410) dafür ausgelegt und konfiguriert ist, das erste und das zweite Roboterarbeitswerkzeug (300A, 300B) zu versorgen,
wobei das Roboterarbeitswerkzeugsystem (400) ferner für Folgendes konfiguriert ist:
Identifizieren des ersten Roboterarbeitswerkzeugs (300A), wenn sich das erste Roboterarbeitswerkzeug (300A) in der Ladestation (410) befindet, und
Senden einer zweiten Nachricht an das zweite Roboterarbeitswerkzeug (300B), um dem zweiten Roboterarbeitswerkzeug (300B) zu signalisieren, dass die Ladestation (410) besetzt ist und dass das zweite Roboterarbeitswerkzeug (300B) jeden Versuch unterbrechen sollte, die Ladestation (410) zu erreichen.

2. Roboterarbeitswerkzeugsystem (400) nach Anspruch 1, wobei die Benutzersteuerkonsole mindestens eine Taste (470) umfasst.

3. Roboterarbeitswerkzeugsystem (400) nach Anspruch 1 oder 2, wobei die Funktionalität mindestens einem entspricht, das einer Gruppe entnommen ist, die Folgendes umfasst: Starten, Stoppen, Anhalten, Abrufen und/oder Umschalten.

4. Roboterarbeitswerkzeugsystem (400) nach einem der vorhergehenden Ansprüche, das ferner dafür konfiguriert ist, die erste Nachricht durch das Signal zu übertragen, das durch den Begrenzungsdraht (450) übertragen wird.

5. Roboterarbeitswerkzeugsystem (400) nach einem der vorhergehenden Ansprüche, wobei das Roboterarbeitswerkzeugsystem (400) ferner dafür konfiguriert ist, zu bestimmen, an welches Roboterarbeitswerkzeugsystem (300A, 300B) die erste Nachricht gesendet werden soll.

6. Roboterarbeitswerkzeugsystem (400) nach Anspruch 5, das ferner dafür konfiguriert, die Bestimmung, an welches Roboterarbeitswerkzeug (300A, 300B) die erste Nachricht gesendet werden soll, auf einer Benutzerauswahl zu basieren.

7. Roboterarbeitswerkzeugsystem (400) nach Anspruch 6, das ferner dafür konfiguriert, die erste Nachricht an alle Roboterarbeitswerkzeuge (300A, 300B) zu senden, wenn keine Benutzerauswahl empfangen wird.

8. Roboterarbeitswerkzeugsystem (400) nach einem der vorhergehenden Ansprüche, wobei das Roboterarbeitswerkzeugsystem (400) dafür konfiguriert ist, eine Nachricht an das zweite Roboterarbeitswerkzeug (300B) zu senden, die einen Befehl zum Umschalten von einem zweiten Arbeitsbereichsunterabschnitt (405B) zu einem ersten Arbeitsbereichsunterabschnitt (405A) anzeigt, der näher an der Ladestation (410) liegt, da das erste Roboterarbeitswerkzeug (300A) von der Ladestation (410) versorgt wurde.

9. Roboterarbeitswerkzeugsystem (400) nach einem der vorhergehenden Ansprüche, wobei das erste und das zweite Roboterarbeitswerkzeug (300A, 300B) Roboterrasenmäher sind.

10. Verfahren zur Verwendung in einem Roboterarbeitswerkzeugsystem (400), das Folgendes umfasst: ein erstes und ein zweites Roboterarbeitswerkzeug (300A, 300B), eine Ladestation (410), einen Begrenzungsdraht (450), einen Signalgenerator (440) zum Erzeugen und Übertragen eines Signals durch den Begrenzungsdraht (450) zum Abgrenzen eines Arbeitsbereichs (405); wobei das Verfahren Folgendes umfasst:
Empfangen von Benutzereingaben, die eine Funktionalität anzeigen, über eine Benutzersteuerkonsole (470); und
Senden einer ersten Nachricht an das erste und/oder das zweite Roboterarbeitswerkzeug (300A, 300B),
wobei die erste Nachricht einen Befehl zum Bewirken der angegebenen Funktionalität umfasst und
Empfangen der ersten Nachricht und Ausführen der angegebenen Funktionalität im ersten und/oder zweiten Roboterarbeitswerkzeug (300A, 300B),
wobei das Verfahren **dadurch gekennzeichnet ist, dass**
die Ladestation (410) dafür ausgelegt und konfiguriert ist, das erste und das zweite Roboterarbeitswerkzeug (300A, 300B) zu versorgen,
wobei das Verfahren ferner Folgendes umfasst:
Identifizieren des ersten Roboterarbeitswerkzeugs (300A), wenn sich das erste Roboterarbeitswerkzeug (300A) in der Ladestation (410) befindet, und
Senden einer zweiten Nachricht an das zweite Roboterarbeitswerkzeug (300B), um dem zweiten Roboterarbeitswerkzeug (300B) zu signalisieren, dass die Ladestation (410) besetzt ist und dass das zweite Roboterarbeitswerkzeug (300B) jeden Versuch unterbrechen sollte, die Ladestation (410) zu erreichen.

## Revendications

1. Système d'outil de travail robotisé (400), comprenant un premier et un second outil de travail robotisé (300A, 300B), une station de charge (410), un câble périphérique (450), un générateur de signal (440) pour générer et transmettre un signal à travers ledit câble périphérique (450) pour délimiter une zone de travail (405), ledit système d'outil de travail robotisé (400) étant configuré pour :
recevoir une entrée d'utilisateur indiquant une fonctionnalité via une console de commande utilisateur (470) ; et
transmettre un premier message au premier et / ou au second outil de travail robotisé (300A, 300B), le premier message comprenant une commande pour effectuer la fonctionnalité indiquée ;
par lequel le premier et / ou le second outil de travail robotisé (300A, 300B) est configuré pour :
recevoir ledit premier message et exécuter la fonctionnalité indiquée, le système d'outils de travail robotisé étant **caractérisé en ce que** ladite station de charge (410) est agencée et configurée pour desservir lesdits premier et second outils de travail robotisés (300A, 300B),
dans lequel le système d'outil de travail robotisé (400) est en outre configuré pour :
identifier le premier outil de travail robotisé (300A) lorsque le premier outil de travail robotisé (300A) est dans la station de charge (410), et pour
transmettre un second message au second outil de travail robotisé (300B) pour signaler au second outil de travail robotisé (300B) que la station de charge (410) est occupée et que le second outil de travail robotisé (300B) doit interrompre toute tentative d'atteindre la station de charge (410) .

2. Système d'outil de travail robotisé (400) selon la revendication 1, dans lequel la console de commande utilisateur comprend au moins un bouton (470).

3. Système d'outil de travail robotisé (400) selon la revendication 1 ou 2, dans lequel la fonctionnalité correspond à au moins une prise dans un groupe comprenant : le démarrage, l'arrêt, la pause, le rappel et / ou la commutation.

4. Système d'outil de travail robotisé (400) selon l'une quelconque des revendications précédentes, configuré en outre pour transmettre ledit premier message par le biais du signal transmis à travers le câble périphérique (450).

5. Système d'outil de travail robotisé (400) selon l'une quelconque des revendications précédentes, dans lequel le système d'outil de travail robotisé (400) est en outre configuré pour déterminer à quel outil de travail robotisé (300A, 300B) transmettre ledit premier message.

6. Système d'outil de travail robotisé (400) selon la revendication 5, configuré en outre pour baser la détermination de quel outil de travail robotisé (300A, 300B) pour transmettre ledit premier message sur une sélection d'utilisateur.

7. Système d'outil de travail robotisé (400) selon la revendication 6, configuré en outre pour transmettre ledit premier message à tous les outils de travail robotisés (300A, 300B) si aucune sélection d'utilisateur n'est reçue.

8. Système d'outil de travail robotisé (400) selon l'une quelconque des revendications précédentes, dans lequel le système d'outil de travail robotisé (400) est configuré pour transmettre un message audit second outil de travail robotisé (300B) indiquant une commande pour passer d'une seconde sous-section de zone de travail (405B) à une première sous-section de zone de travail (405A) étant plus proche de la station de charge (410) car le premier outil de travail robotisé (300A) a été desservi par la station de charge (410).

9. Système d'outil de travail robotisé (400) selon l'une quelconque des revendications précédentes, dans lequel les premier et second outils de travail robotisés (300A, 300B) sont des tondeuses à gazon robotisées.

10. Procédé à utiliser dans un système d'outil de travail robotisé (400), comprenant un premier et un second outil de travail robotisé (300A, 300B), une station de charge (410), un câble périphérique (450), un générateur de signal (440) pour générer et transmettre un signal à travers ledit câble périphérique (450) pour délimiter une zone de travail (405), le procédé comprenant :
la réception d'une entrée d'utilisateur indiquant une fonctionnalité via une console de commande utilisateur (470) ; et
la transmission d'un premier message au premier et / ou au second outil de travail robotisé (300A, 300B), dans lequel le premier message comprend une commande pour effectuer la fonctionnalité indiquée ; et
la réception dudit premier message et l'exécution de la fonctionnalité indiquée dans le premier et / ou le second outil de travail robotisé (300A, 300B), ledit procédé étant **caractérisé en ce que** ladite station de charge (410) est agencée et configurée pour desservir lesdits premier et second outils de travail robotisés (300A, 300B), dans lequel le procédé comprend en outre
l'identification du premier outil de travail robotisé (300A) lorsque le premier outil de travail robotisé (300A) est dans la station de charge (410), et
la transmission d'un second message au second outil de travail robotisé (300B) pour signaler au second outil de travail robotisé (300B) que la station de charge (410) est occupée et que le second outil de travail robotisé (300B) doit interrompre toute tentative d'atteindre la station de charge (410) .
